# EUROPEAN PATENT SPECIFICATION

(11) **EP 2 380 748 B1**
(45) Date of publication and mention of the grant of the patent: **21.11.2012**
(21) Application number: 10161035.0
(22) Date of filing: 26.04.2010
(51) Int. Cl.: B60B 7/20

(54) **Rotary wheel cap**
Drehende Radabdeckung
Enjoliveur rotatif

(43) Date of publication of application: 26.10.2011
(73) Proprietor: Yin, Chih-Hao, Auckland 1050 (NZ)
(72) Inventor: Yin, Chih-Hao, Auckland 1050 (NZ)
(74) Representative: 2K Patentanwälte Blasberg Kewitz & Reichel

(56) References cited:
- DE-A1- 3 918 558
- DE-A1- 4 101 726
- US-A- 3 005 906
- US-A- 5 623 777
- US-A1- 2006 028 059
- US-A1- 2006 055 230

## Description

### FIELD OF THE INVENTION

The present invention relates to a rotary wheel cap, and more particularly to a rotary wheel cap installed at the center of a wheel, and decorated by a brand logo or a design pattern. Such a wheel cap is known from US 2006/0028059 A.

### BACKGROUND OF THE INVENTION

In motor vehicles, a wheel cap is generally installed on an outer side of a wheel axle. The wheel cap not only covers the rigid mechanical structure of the wheel and serves as a decoration, but also protects a wheel bearing. As disclosed in U.S. Patent Nos. 4,457,560 and 6,585,330, a wheel cap is secured onto a wheel by screws and nuts, such that when the wheel is rotated, the wheel cap will be rotated synchronously, and will not be separated from the wheel during the rotation.

In general, most wheel caps of wheels come with a brand logo of a motor vehicle or the wheel, and such arrangement not only serves as a decoration, but also achieves effect of advertising and promoting the brand of the motor vehicle or the wheel. However, the wheel caps disclosed in the aforementioned two prior arts are rotated with the wheels synchronously, so that when the wheel is still, the brand logo on the wheel cap will be rotated to an uncertain angle or position, such as an overturn angle of 90 degrees or 180 degrees from the relative correct position. As a result, the brand logo is deflective or upside down, and people cannot recognize the meaning of the brand logo on the wheel cap easily.

Further, U.S. Patent No. 5,490,342 discloses a wheel cap comprising a fixed cover mounted onto a wheel, and a movable cover mounted onto the fixed cover, wherein the movable cover includes an axle strut for coupling with a bearing on the fixed cover, so that the movable cover and the fixed cover can be rotated axially with respect to each other, and the movable cover includes a balance weight, such that the movable cover can be maintained at a predetermined angle and position by means of the gravitation of the balance weight and the axial rotation of the bearing whether the wheel drives the fixed cover to rotate or not.

### SUMMARY OF THE INVENTION

Therefore, it is a primary objective of the present invention to provide a rotary wheel cap that can be rotated synchronously with a wheel of a motor vehicle when the motor vehicle is driven but enables positioning of the rotary wheel cap at a predetermined angular orientation when the motor is retarded or stopped.

This problem is solved by a rotary wheel cap according to claim 1. Further advantageous embodiments are the subject-matter of the dependent claims.

According to the present invention the rotary wheel cap is configured and supported such that it can be rotated axially by itself to a correct position, in particular to a predetermined angular orientation, when the motor vehicle is retarded or stopped, in particular in order to enable recognition of a design pattern on the surface of the rotary wheel cap easily.

To achieve the foregoing objective, the present invention provides a rotary wheel cap comprising a fixed base fixed at the center of a wheel, a rotary cover axially mounted onto the fixed base, and an elastic member installed between the fixed base and the rotary cover, wherein the fixed base includes an air suction portion driven by the fixed base and rotated with the wheel for sucking external air, and the rotary cover is rotated axially with respect to the fixed base and includes a weight balancing portion, and the fixed base and the rotary cover include respectively a first positioning portion and a second positioning portion correspondingly.

When the motor vehicle is driven, the wheel drives the fixed portion and the air suction portion to rotate, and the air suction portion sucks the rotary cover to compress the elastic member, such that the rotary cover is situated at a first position to define a positioning relationship between the first and second positioning portions, so that the rotary cover is rotated with the wheel at the first position. When the motor vehicle is stopped, the wheel, the fixed base and the air suction portion are stopped at the same time, and the rotary cover is situated at a second position and elastically supported by the elastic member to release the positioning relationship between the first and second positioning portions, so that the rotary cover is rotated axially with respect to the fixed base by the weight of the weight balancing portion at the second position.

### BRIEF DESCRIPTION OF THE DRAWINGS

FIG. 1 is a perspective view of the present invention;
FIG. 2 is an exploded view of the present invention;
FIG. 3 is another exploded view of the present invention;
FIGS. 4A to 4C are schematic views of the present invention in operating conditions; and
FIGS. 5A to 5C are other schematic views of the present invention in operating conditions.

### DETAILED DESCRIPTION OF THE PREFERRED EMBODIMENTS

The technical contents of the invention will now be described in more detail hereinafter with reference to the accompanying drawings that show various embodiments of the invention.

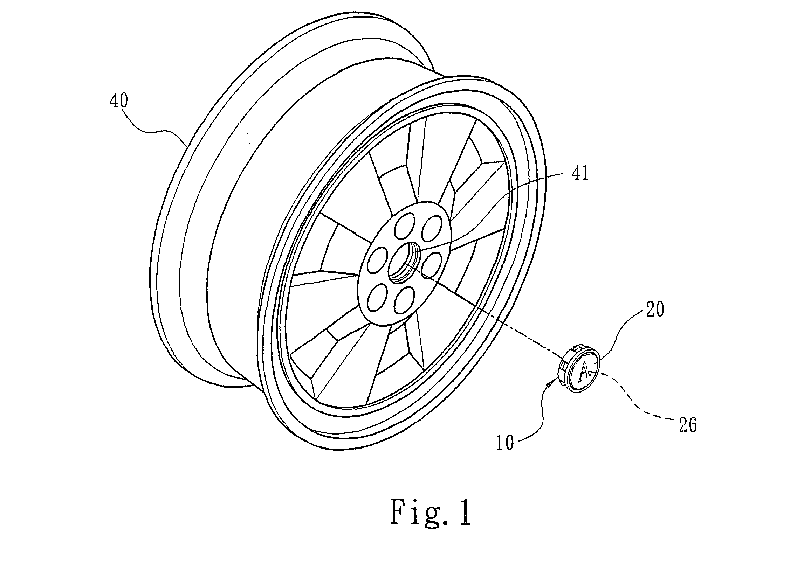

Refer to FIG. 1 for a rotary wheel cap of the present invention, the rotary wheel cap is installed at a center 41 of a wheel 40, and a design pattern 26 such as a brand logo of a motor vehicle, a brand logo of the wheel, or any other character or pattern is used for decorating the wheel.

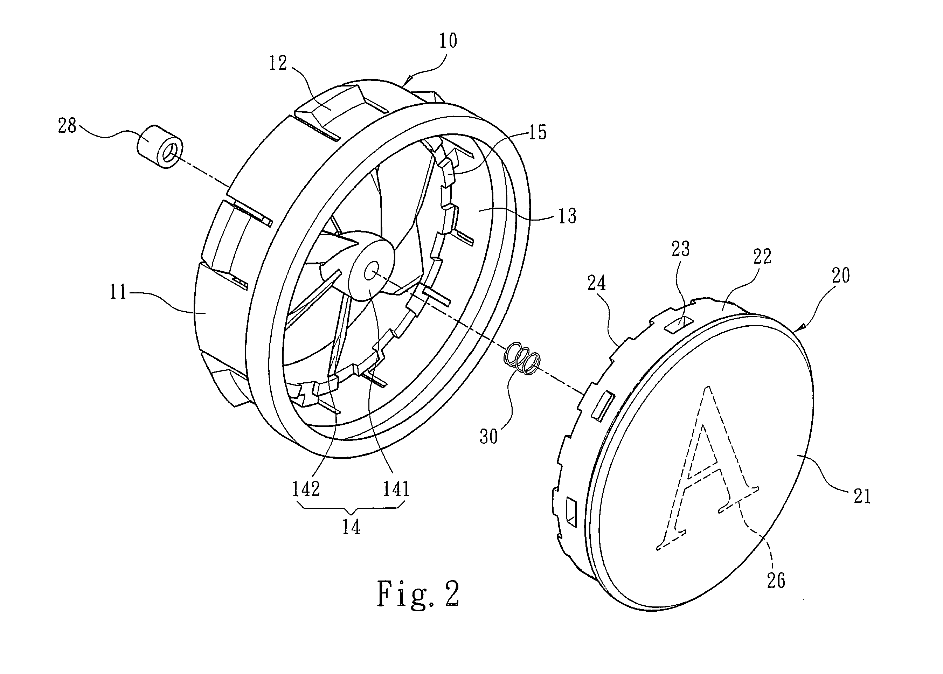

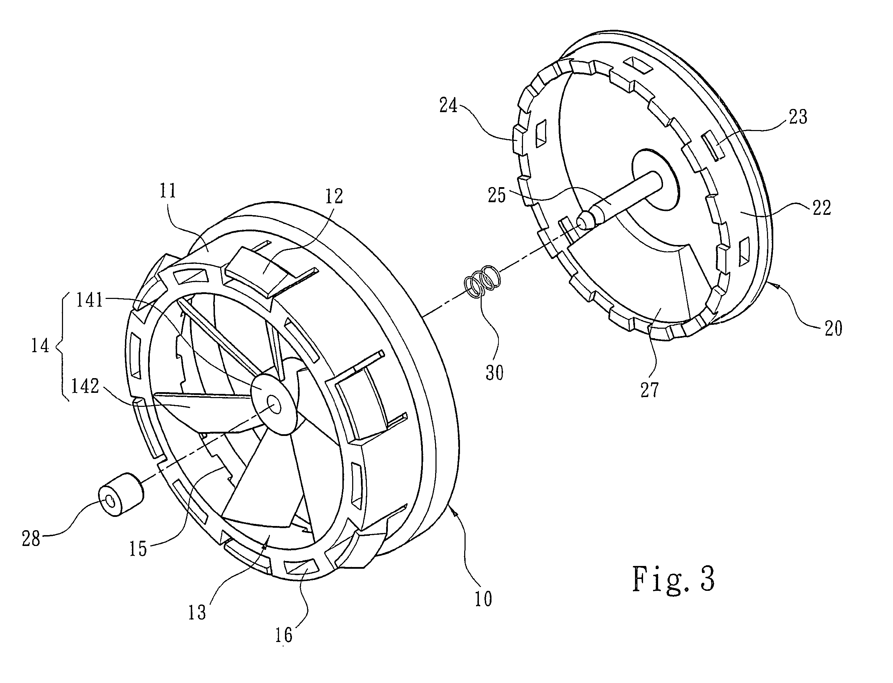

Refer to FIGS. 2 and 3 for the detailed illustration of a rotary wheel cap in accordance with the present invention, the rotary wheel cap comprises a fixed base 10, a rotary cover 20 mounted onto the fixed base 10, and an elastic member 30 installed between the fixed base 10 and the rotary cover 20, wherein the fixed base 10 includes an outer annular portion 11, and the outer annular portion 11 includes a plurality of latch hooks 12 disposed on an outer side thereof for latching and positioning the center 41 of the wheel 40, and an airflow passage 13 having an air suction portion 14 on an inner side, wherein the air suction portion 14 of the present invention is a fan having an axis portion 141 and a plurality of blade portions 142 disposed around the axis portion 141 and coupled to the outer annular portion 11, so that the air suction portion 14 can be driven by the fixed base 10 and rotated with the wheel 40 for sucking external air.

The rotary cover 20 includes a panel 21 and an inner annular portion 22 connected to the panel 21 and held in the inner annular portion 11. The panel 21 has a design pattern 26 on an outer side, such as a brand logo of a motor vehicle or a brand logo of a wheel. To illustrate the present invention, a letter "A" is served as a representative. The rotary cover 20 further includes a weight balancing portion 27 disposed on an inner side of the panel 21, and an axle strut 25 passing through the axis portion 141, such that the rotary cover 20 axially installed at the fixed base 10 is rotated axially with respect to the fixed base 10, and the rotary cover 20 is rotated to a fixed position by the gravitation of the weight balancing portion 27 in a normal condition. In other words, the weight balancing portion 27 is situated at the lowest position which generally sets the design pattern 26 in a correctly aligned position. The axle strut 25 has a fixing cap 28 at an end for preventing the axle strut 25 from separating the axis portion 141. Further, the outer annular portion 11 of the fixed base 10 and the inner annular portion 22 of the rotary cover 20 have respectively a first positioning portion 15 and a second positioning portion 24 correspondingly. In one embodiment of the present invention, the first positioning portion 15 and the second positioning portion 24 are corresponding latching concave and convex structures. In addition, the fixed base 10 and the rotary cover 20 include a plurality of apertures 16, 23 for guiding air while the wheel 40 is rotated. The elastic member 30 is a spring penetrated by the axle strut 25 and installed between the panel 21 of the rotary cover 20 and the axis portion 141 of the fixed base 10, and the rotary cover 20 is separated from the fixed base 10 in a normal condition. The aforementioned elements constitute the main structure of the present invention.

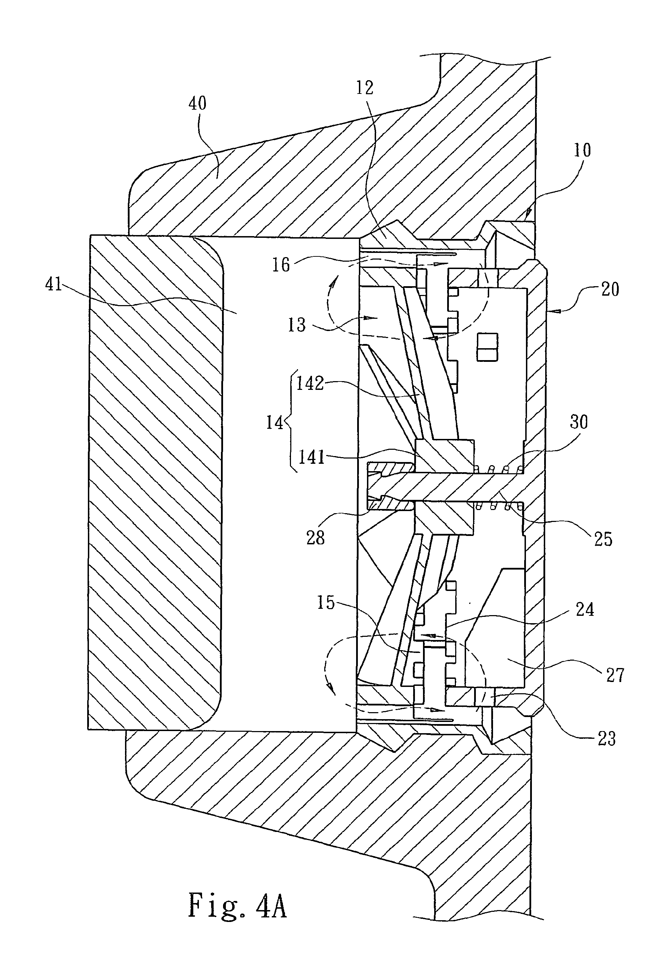

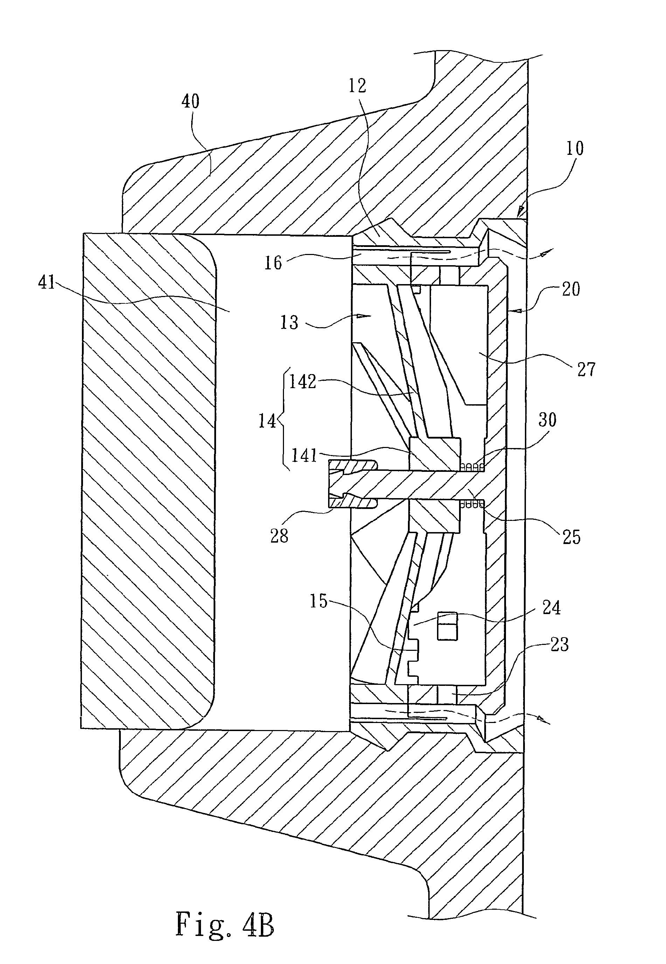

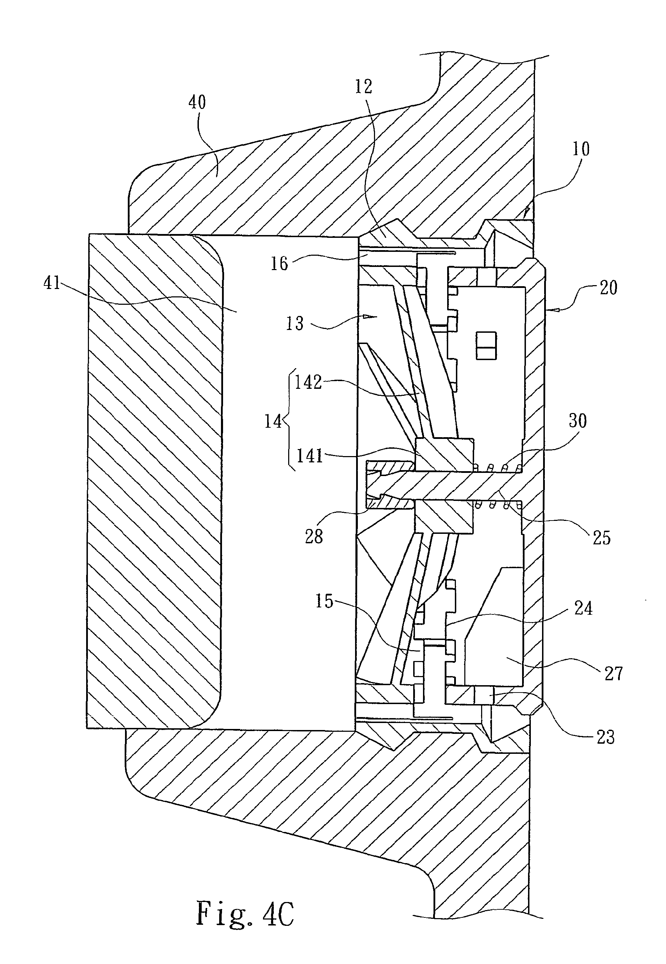

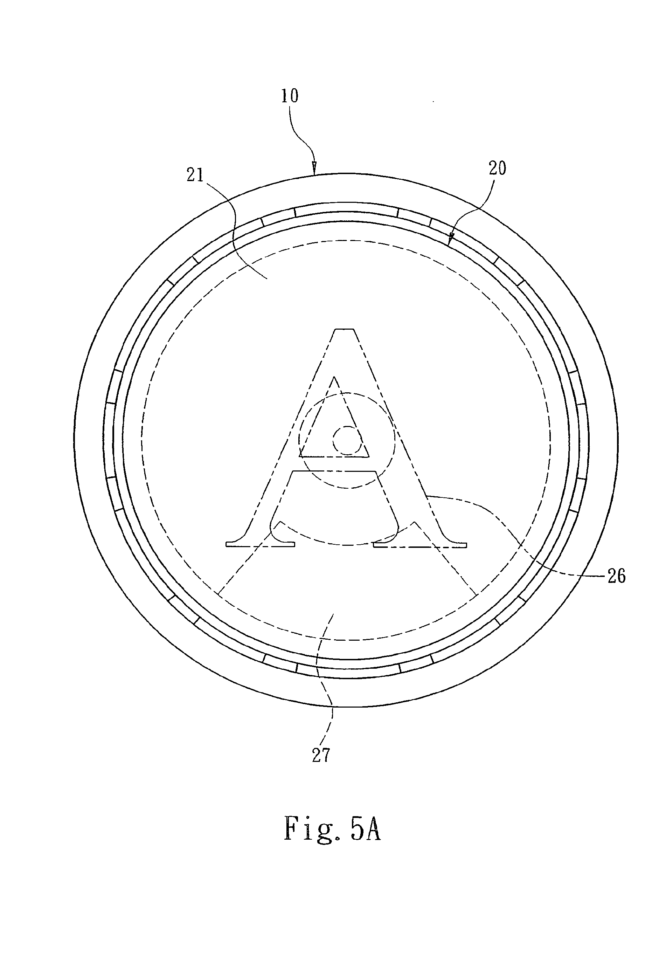

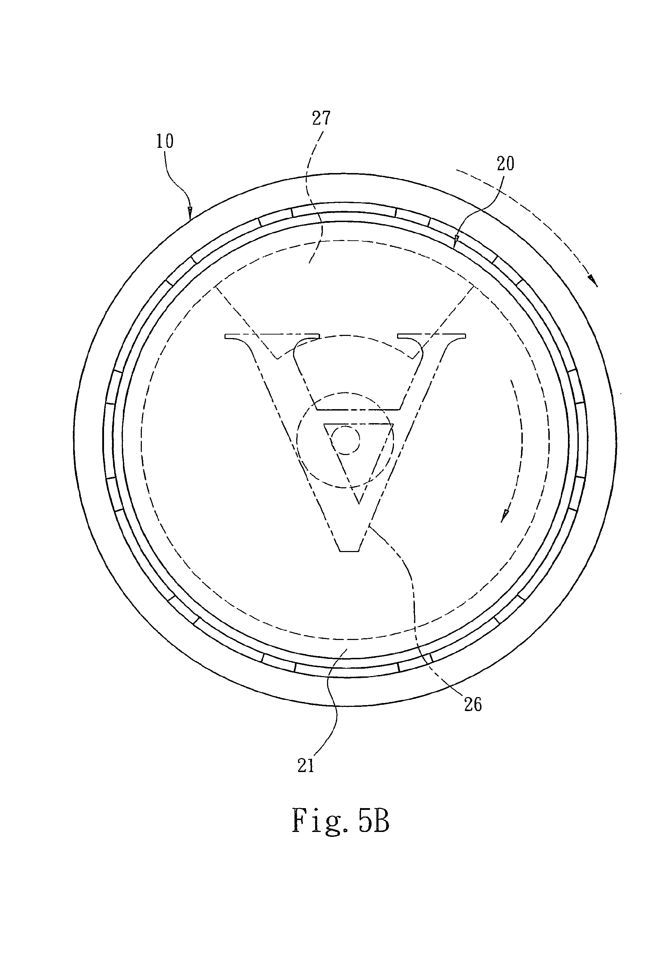

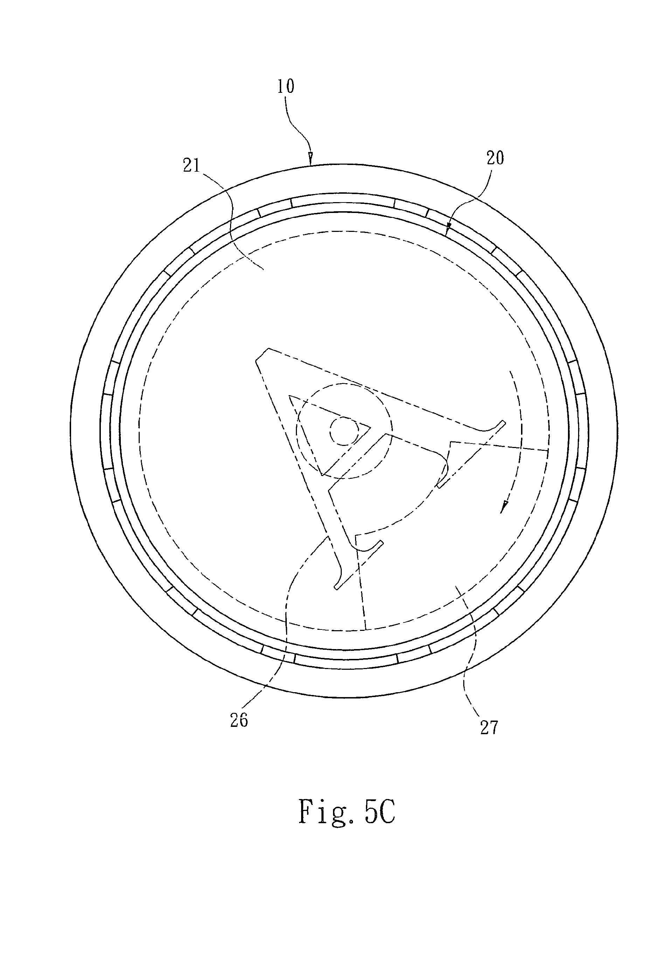

Refer to FIGS. 4A to 4C and FIGS. 5A to 5C for operating conditions of the present invention. When the motor vehicle is started, the wheel 40 drives the fixed base 10 and the air suction portion 14 to rotate synchronously (as shown in FIG. 4A). Now, the gravitation of the weight balancing portion 27 is exerted to the rotary cover 20 to maintain the position of the design pattern 26 on the rotary cover 20 (as shown in FIG. 5A). As the air suction portion 14 rotates and sucks air, and the airflow passage 13 and the apertures 16, 23 form a backflow to suck the rotary cover 20 to compress the elastic member 30, so that the rotary cover 20 is situated at a first position (as shown in FIG. 4B) to form a latching and positioning relationship between the first and second positioning portions 15, 24, and the rotary cover 20 is rotated with the wheel 40 and the fixed base 10 at the first position, and the design pattern 26 on the rotary cover 20 is also rotated synchronously (as shown in FIG. 5B). When the motor vehicle is stopped and the wheel 40 is still, the air suction portion 14 remains still with the fixed base 10 and the wheel 40, and the suction of air is also stopped. Now, the elastic member 30 props the rotary cover 20 away from the fixed base 10, such that the rotary cover 20 is situated at a second position (as shown in FIG. 4C) for releasing the positioning relationship between the first and second positioning portions 15, 24, and the rotary cover 20 is rotated axially with respect to the fixed base 10 by the weight of the weight balancing portion 27 at the second position, and the design pattern 26 on the rotary cover 20 is aligned to a fixed direction (as shown in FIG. 5C).

In conclusion, the rotary wheel cap of the present invention is characterized in that the wheel 40 is rotated with the wheel cap having the design pattern 26 thereon. When the wheel 40 is still, the design pattern 26 on the wheel cap can be rotated axially by itself to a desired fixed direction, such that when the motor vehicle is retarded or stopped, the design pattern 26 can be recognized easily to achieve eye-catching, advertising and promotion effects.

## Claims

1. A rotary wheel cap, **characterized by**:
a fixed base (10) fixed at a center (41) of a wheel (40) including an air suction portion (14) and a first positioning portion (15), the air suction portion (14) being driven by the fixed base (10) and rotated with the wheel (40) for sucking external air;
a rotary cover (20) installed axially at the fixed base (10) and axially rotated with respect to the fixed base (10) including a second positioning portion (24) corresponding to the first positioning portion (15) and a weight balancing portion (27); and
an elastic member (30) installed between the fixed base (10) and the rotary cover (20) for supporting the fixed base (10) and the rotary cover (20);
wherein the rotary cover (20) is sucked by the air suction portion (14) to compress the elastic member (30) while the wheel (40) is rotating, and the rotary cover (20) is situated at a first position for forming a positioning relationship between the first and second positioning portions (15, 24), so that the rotary cover (20) is rotated with the wheel (40) at the first position;
and when the wheel (40) is still, the rotary cover (20) is supported by the elastic member (30) and situated at a second position for forming a released relationship between the first and second positioning portions (15, 24), so that the rotary cover (20) is rotated axially with respect to the fixed base (10) by the weight of the weight balancing portion (27) at the second position.

2. The rotary wheel cap of claim 1, wherein the fixed base (10) includes an outer annular portion (11), and the outer annular portion (11) includes an airflow passage (13) installed the air suction portion (14).

3. The rotary wheel cap of claim 2, wherein the outer annular portion (11) includes a plurality of latch hooks (12) for latching and positioning the center (41) of the wheel (40).

4. The rotary wheel cap of claim 2, wherein the air suction portion (14) includes an axis portion (141) and a plurality of blade portions (142) disposed around the axis portion (141) and coupled to the outer annular portion (11).

5. The rotary wheel cap of claim 4, wherein the rotary cover (20) includes an axle strut (25) passing through the axis portion (141), and a fixing cap (28) installed at an end of the axle strut (25).

6. The rotary wheel cap of claim 5, wherein the elastic member (30) is passed through the axle strut (25) between the axis portion (141) and the rotary cover (20) for supporting the axis portion (141) and the rotary cover (20).

7. The rotary wheel cap of claim 2, wherein the rotary cover (20) includes a panel (21) and an inner annular portion (22) connected to the panel (21) and held in the outer annular portion (11).

8. The rotary wheel cap of claim 1, wherein the first positioning portion (15) and the second positioning portion (24) are corresponding latching concave and convex structures.

9. The rotary wheel cap of claim 1, wherein the fixed base (10) and the rotary cover (20) include a plurality of apertures (16, 23) for guiding air while the wheel (40) is rotating.

10. The rotary wheel cap of claim 1, wherein the rotary cover (20) includes a design pattern (26).

## Patentansprüche

1. Drehbewegliche Radabdeckung, **gekennzeichnet durch**:
eine ortsfeste Basis (10), die ortsfest an einer Mitte (41) eines Rades (40) vorgesehen ist, mit einer Luftansaugeinrichiung (14) und einem ersten Positionierungsabschnitt (15), wobei die Luftansaugeinrichtung (14) **durch** die ortsfeste Basis angetrieben wird (10) und gemeinsam mit dem Rad (40) zum Ansaugen von Außenluft gedreht wird;
eine drehbewegliche Abdeckung (20), die axial an der ortsfesten Basis (10) befestigt ist und relativ zu der ortsfesten Basis (10) gedreht wird, mit einem zweiten Positionierungsabschnitt (24), der dem ersten Positionierungsabschnitt (15) zugeordnet ist, und einem Gewichtsausgleichs-Abschnitt (27); und
ein elastisches Element (30), das zwischen der ortsfesten Basis (10) und der drehbeweglichen Abdeckung (20) zum Abstützen der ortsfesten Basis (10) und der drehbeweglichen Abdeckung (20) montiert ist;
wobei die drehbewegliche Abdeckung (20) **durch** die Luftansaugeinrichtung (14) angesaugt wird, während das Rad (40) sich dreht, um das elastische Element (30) zu komprimieren, und wobei die drehbewegliche Abdeckung (20) sich bei einer ersten Position zum Ausbilden ein Lagebeziehung zwischen dem ersten und zweiten Positionierungsabschnitt (15, 24) befindet, so dass die drehbewegliche Abdeckung (20) gedreht wird, wenn sich das Rad (40) bei der ersten Position befindet;
und wobei, wenn das Rad (40) sich nicht dreht, die drehbewegliche Abdeckung (20) durch das elastische Element (30) abgestützt ist und sich bei einer zweiten Position zur Ausbildung einer Freigabebeziehung zwischen dem ersten und zweiten Positionierungsabschnitt (15, 24) befindet, so dass sich die drehbewegliche Abdeckung (20) axial relativ zu der ortsfesten Basis (10) **durch** das Gewicht des Gewichtsausgleichs-Abschnitts (27) bei der zweiten Position dreht.

2. Drehbewegliche Radabdeckung nach Anspruch 1, wobei die ortsfeste Basis (10) einen äußeren ringförmigen Abschnitt (11) aufweist und der äußere ringförmige Abschnitt (11) einen Luftströmungsdurchgang (13) aufweist, der in die Luftansaugeinrichtung (14) eingebaut ist.

3. Drehbewegliche Radabdeckung nach Anspruch 2, wobei der äußere ringförmige Abschnitt (11) eine Mehrzahl von Rasthaken (12) zum Verriegeln und Positionieren der Mitte (41) des Rades (40) aufweist.

4. Drehbewegliche Radabdeckung nach Anspruch 2, wobei die Luftansaugeinrichtung (14) einen Achsabschnitt (141) und eine Vielzahl von Schenkelbereichen (142) aufweist, die um die Achse (141) herum angeordnet sind und mit dem äußeren ringförmigen Abschnitt (11) gekoppelt sind.

5. Drehbewegliche Radabdeckung nach Anspruch 4, wobei die drehbewegliche Abdeckung (20) eine Achsstrebe (25), die sich durch die Achse (141) erstreckt, und eine Befestigungskappe (28) aufweist, die an einem Ende der Achsstrebe (25) befestigt ist.

6. Drehbewegliche Radabdeckung nach Anspruch 5, wobei das elastische Element (30) sich durch die Achsstrebe (25) zwischen dem Achsabschnitt (141) und der drehbeweglichen Abdeckung (20) erstreckt, um den Achsabschnitt (141) und die drehbewegliche Abdeckung (20) abzustützen.

7. Drehbewegliche Radabdeckung nach Anspruch 2, wobei die drehbewegliche Abdeckung (20) eine Platte (21) und einen inneren ringförmigen Abschnitt (22) aufweist, der mit der Platte (21) verbunden und in dem äußeren ringförmigen Abschnitt (11) gehalten ist.

8. Drehbewegliche Radabdeckung nach Anspruch 1, wobei der erste Positionierungsabschnitt (15) und der zweite Positionierungsabschnitt (24) einander entsprechende konkave und konvexe Verrastungsgebilde sind.

9. Drehbewegliche Radabdeckung nach Anspruch 1, wobei die ortsfeste Basis (10) und die drehbewegliche Abdeckung (20) eine Vielzahl von Öffnungen (16, 23) aufweisen, um Luft zu führen, während das Rad (40) sich dreht.

10. Drehbewegliche Radabdeckung nach Anspruch 1, wobei die drehbewegliche Abdeckung (20) ein Designmuster (26) aufweist.

## Revendications

1. Un enjoliveur de roue rotatif, **caractérisé par**:
une base fixe (10) fixée au centre (41) d'une roue (40) comportant un élément d'aspiration d'air (14) et un premier élément de positionnement (15), l'élément d'aspiration d'air (14) étant entraînée par la base fixe (10) et mise en rotation avec la roue (40) pour une aspiration d'air extérieur;
un capot rotatif (20) disposé axialement sur la base fixe (10) et mise en rotation axialement par rapport à la base fixe (10) comportant un second élément de positionnement (24) correspondant au premier élément de positionnement (15) et une partie d'équilibrage de poids (27); et
un élément élastique (30) disposé entre la base fixe (10) et le capot rotatif (20) pour le support de la base fixe (10) et du capot rotatif (20);
dans lequel le capot rotatif (20) est aspiré par l'élément d'aspiration d'air (14) pour comprimer l'élément élastique (30) pendant que la route (40) tourne, et le capot rotatif est disposé dans une première position pour former une relation de positionnement entre le premier et le second élément de positionnement (15, 24), de telle manière que le capot rotatif (20) est mis en rotation avec la roue (40) à la première position; et lorsque la roue (40) est immobile, le capot rotatif (20) est supporté par l'élément élastique (30) et situé dans une seconde position pour libérer la relation de positionnement entre les premier et second éléments de positionnement (15, 24), de telle manière que le capot rotatif (20) est mis en rotation axiale par rapport à la base fixe (10) par le poids de la partie d'équilibrage de poids (28) dans la seconde position.

2. L'enjoliveur de roue rotatif de la revendication 1, dans lequel la base fixe (10) comporte une partie annulaire extérieure (11), et la partie annulaire extérieure (11) comporte un passage d'air (13) disposé dans la partie d'aspiration d'air.

3. L'enjoliveur de roue rotatif de la revendication 2, dans lequel la partie annulaire extérieure (11) comporte une pluralité de crochets de verrouillage (12) pour verrouiller et positionner le centre (41) de la roue (40).

4. L'enjoliveur de roue rotatif de la revendication 2, dans lequel l'élément d'aspiration d'air (14) comporte une partie axiale (141) et une pluralités d'éléments d'ailettes (142) disposés autour de la partie axiale (141) et couplée à la partie annulaire extérieure (11).

5. L'enjoliveur de roue rotatif de la revendication 4, dans lequel le capot rotatif (20) comporte un axe (25) passant au travers de la partie axiale (141), et un capuchon de fixation (28) disposé à une extrémité de l'axe (25).

6. L'enjoliveur de route rotatif de la revendication 5, dans lequel l'élément élastique (30) passe au travers de l'axe (25) entre la partie axiale (141) et le capot rotatif (20) pour soutenir la partie axiale (141) et le capot rotatif (20).

7. L'enjoliveur de roue rotatif de la revendication 2, dans lequel le capot rotatif (20) comporte un panneau (21) et une partie annulaire interne (22) connectée au panneau (21) et maintenue dans la partie annulaire externe (11).

8. L'enjoliveur de roue rotatif de la revendication 1, dans lequel le premier élément de positionnement (15) et le second élément de positionnement (24) sont des structures de verrouillage concaves et convexes correspondantes.

9. L'enjoliveur de roue rotatif selon la revendication 1, dans lequel la base fixe (10) et le capot rotatif (20) comportent plusieurs ouvertures (16, 23) pour le guidage d'air pendant que la roue (40) tourne.

10. L'enjoliveur de roue rotatif selon la revendication 1, dans lequel le capot rotatif (20) comporte un motif esthétique (26).
